# EUROPÄISCHE PATENTSCHRIFT

(11) **EP 3 042 209 B1**
(45) Veröffentlichungstag und Bekanntmachung des Hinweises auf die Patenterteilung: **26.12.2018**
(21) Anmeldenummer: 14780778.8
(22) Anmeldetag: 05.09.2014
(51) Int. Cl.: G01P 3/44

(54) **FEHLERÜBERMITTLUNG IM ZWEIPEGEL-DREHZAHLSENSOR**
ERROR TRANSMISSION IN TWO-LEVEL ROTATIONAL SPEED SENSOR
COMMUNICATION DE DÉFAILLANCE DANS LE CAPTEUR DE VITESSE DE ROTATION À DEUX NIVEAUX

(30) Priorität: 06.09.2013 DE 102013217883; 11.02.2014 DE 102014202473
(43) Veröffentlichungstag der Anmeldung: 13.07.2016
(73) Patentinhaber: Continental Teves AG & Co. OHG, 60488 Frankfurt am Main (DE)
(72) Erfinder: TRAPP, René, 66887 Föckelberg (DE); ZACHOW, Jochen, 61479 Glashütten (DE); SUCHANOW, Valentina, 71032 Böblingen (DE)
(86) Internationale Anmeldenummer: PCT/EP2014/069007
(87) Internationale Veröffentlichungsnummer: WO 2015/032930

(56) Entgegenhaltungen:
- US-A1- 2004 066 183
- US-A1- 2010 134 174

## Beschreibung

Die Erfindung betrifft ein Verfahren zum Senden einer Fehlerinformation in einem Pulssignal, eine Steuervorrichtung zur Durchführung des Verfahrens und einen Sensor mit der Steuervorrichtung.

Aus der DE 10 2011 080 789 A1 ist ein Fahrzeug bekannt, in dem Raddrehzahlsensoren zur Erfassung der Raddrehzahl der einzelnen Räder verbaut sind. Diese Raddrehzahlsensoren sind aktive Raddrehzahlsensoren und übertragen ihre Messdaten in Form von Raddrehzahlen über ein Kabel als Übertragungsstrecke an eine Auswerteeinrichtung.

US 2010/134174 offenbart eine Schaltungsanordnung und die Verwendung der Schaltungsanordnung zur Steuerung oder Regelung der elektrischen Signale und Größen auf den Kanälen der Sensoren und der Sensorsysteme in Kraftfahrzeugen, wobei der Leitungszweig eine Einrichtung zur Strommessung, insbesondere einen Widerstand über dem der Spannungsabfall gemessen wird, aufweist. Dadurch kann eine Rückspeisung und andere Fehlerströme erkannt werden.

US 2004/066183 offenbart einen Raddrehzahlsensor, welcher eine Erkennung von Leitungsfehlern durch ein mit dem Sensor verbundenes elektronisches Steuergerät erlaubt. Beschrieben ist ein aktiver Magnetsensor, insbesondere zur Erfassung des Drehverhaltens eines Rades, umfassend einen magnetoelektrischen Wandler (2), der mit einem Modulator (5) elektrisch verbunden ist.

Es ist Aufgabe der Erfindung, die Übertragung der Messdaten zu verbessern.

Die Aufgabe wird durch die Merkmale der unabhängigen Ansprüche gelöst. Bevorzugte Weiterbildungen sind Gegenstand der abhängigen Ansprüche.

Gemäß einem Aspekt der Erfindung umfasst ein Verfahren zum Senden einer Fehlerinformation in einem Pulssignal, das eingerichtet ist, Messwerte aus einem Sensor frequenzmoduliert mit eine erste Höhe aufweisenden Höhe Pulsen an einen Empfänger zu übertragen, die Schritte Erkennen eines Fehlers im Sensor, und Einbringen eines eine zweite, von der ersten Höhe verschiedene, Höhe aufweisenden Pulses in das Pulssignal, um den erkannten Fehler im Pulssignal anzuzeigen.

Dem angegebenen Verfahren liegt die Überlegung zugrunde, zur Einhaltung hoher Sicherheitsstandards fehlerhafte Messwerte zu erkennen und entsprechend bei ihrer Verarbeitung zu berücksichtigen. Die Erkennung der fehlerhaften Messwerte könnte in der Einrichtung geschehen, die die Messwerte verarbeitet. Hier stellt sich jedoch das Problem, dass der Erkennung teils rechenintensive Algorithmen zugrungeliegen, deren Ablauf einer gewissen Zeit bedarf.

Aus diesem Grund wäre es wünschenswert, den die Messwerte erfassenden Sensor in die Erkennung der fehlerhaften Messwerte mit einzubinden. Hierzu müsste der Sensor jedoch die Information über den Fehler in einem Messwert zusätzlich zum fehlerhaften Messwert selbst übertragen, damit diese Information bei der Verarbeitung berücksichtigt werden kann. Je mehr Informationen der Sensor über den Fehler bereitstellt, desto schneller kann dabei bei der Verarbeitung darauf reagiert werden, was insbesondere bei Anwendungen in einem Fahrzeug die Sicherheit deutlich erhöhen kann.

Der Absicht, einen Hinweis auf den Fehler und möglichst viele Informationen über den Fehler zu übertragen, steht im Sensor, der seine Messwerte frequenzmoduliert sendet, die Tatsache entgegen, dass es für den Empfänger schwierig ist, aus dem frequenzmodulierten Signal zu entscheiden, welche Pulse Informationen über die Messwerte und welche Pulse anderweitige Informationen tragen.

Hier setzt das angegebene Verfahren an, im Rahmen dessen vorgeschlagen wird, die Informationen zu den Messwerten und die Informationen über eventuell auftretende Fehler mit Pulsen verschiedener Höhe zu übertragen. Auf diese Weise ist für den Empfänger allein schon aus der Tatsache heraus, dass Pulse mit einer Höhe empfangen werden, die von der Höhe der die Messwertinformation tragenden Pulsen unterschiedlich ist, ersichtlich, dass ein Fehler vorliegt und der Empfänger kann entsprechend darauf reagieren. Auf diese Weise werden die Zuverlässigkeit der Messwerte und damit deren Integrität empfängerseitig gesteigert.

Über diese Pulse mit der ersten Höhe und der zweiten Höhe hinaus sollten keine weiteren Pulse mit anderen Höhen übertragen werden.

In einer Weiterbildung des angegebenen Verfahrens wird der Messwert als Puls aus einem aktiven Drehzahlsensor in das Datenübertragungssignal eingetragen. In aktiven Drehzahlsensoren werden Raddrehzahlinformationen bekanntermaßen frequenzmoduliert mit Pulsen ausgegebenen, aus deren Anzahl über einen bestimmten Zeitraum sich die Drehzahl ableiten lässt. Als Beispiel sei hier eine Fahrdynamikregelung für ein Fahrzeug genannt, die insbesondere in hohen Drehzahlbereichen der Räder zuverlässig reagieren muss. Hier kann das Verfahren in besonders günstiger Weise die Qualität der Fehlerbehandlung verbessern.

In einer Weiterbildung des angegebenen Verfahrens ist der Puls mit der zweiten Höhe, gesehen von den Pulsen mit der ersten Höhe aus, negativ. Auf diese Weise wird die Unterscheidbarkeit zwischen den Pulsen mit der ersten Höhe und dem Puls mit der zweiten Höhe deutlich erhöht, so dass das Auftreten eines Fehlers im Pulssignal besonders deutlich erkennbar ist.

Gemäss dem erfindungsgemässen Verfahren folgt der Puls mit der zweiten Höhe unmittelbar auf einen Puls mit der ersten Höhe, so dass beide Pulse eine gemeinsame Flanke aufweisen. Auf diese Weise kann der Puls mit der ersten Höhe unmittelbar vor dem Puls mit der zweiten Höhe mit dazu verwendet werden, einen eventuell aufgetretenen Fehler anzuzeigen, und entweder alle nachfolgenden Pulse mit der ersten Höhe für ungültig zu erklären oder den Anfang eines Fehlerbeschreibungsprotokolls einzuleiten, mit dem nähere Informationen zu dem aufgetretenen Fehler beschrieben werden.

Um die zuvor genannte Weiterbildung des angegebenen Verfahrens weiter zu verbessern, kann dem Puls mit der zweiten Höhe ein die erste höhe aufweisender Puls mit einer vorbestimmten Breite vorangehen, so dass noch klarer angedeutet wird, dass dieser Puls mit der ersten Höhe zur Einleitung des Fehlerbeschreibungsprotokolls dient. Dabei sollte beachtet werden, dass es im Rahmen dieser Weiterbildung nicht unbedingt notwendig ist, dass die beiden genannten Pulse unmittelbar aufeinander folgen.

In einer besonderen Weiterbildung weisen der zweite Puls mit der zweiten Höhe und der dem zweiten Puls vorangehende Puls mit der ersten Höhe die gleiche vorbestimmte Breite auf. Auf diese Weise kann sich der Empfänger auf die Pulsbreite der beiden Pulse synchronisieren und auf dem Empfang eines eventuell nachgelagerten Fehlerbeschreibungsprotokolls vorbereiten.

Im Rahmen dieses Fehlerbeschreibungsprotokolls kann wenigstens ein weiterer eine zweite, von der ersten Höhe verschiedene Höhe aufweisender Puls in das Pulssignal eingebracht werden, um den erkannten Fehler zu beschreiben.

Besonders bevorzugt kann der Fehler basierend auf den beiden Pulsen mit der zweiten Höhe und eventuell weiterer darauf folgender Pulse mit der zweiten Höhe codiert werden.

Dabei ist es möglich, dass zwischen den Pulsen der zweiten Höhe, die das Fehlerbeschreibungsprotokoll tragen weitere Pulse mit der ersten Höhe in das Pulssignal eingebracht werden. Dies ist insbesondere dann von Vorteil, wenn der erkannte Fehler nicht sicherheitskritisch ist, so dass der Empfänger den Fehler zwar erkennen muss, die entsprechenden Messdaten aber unter Einschränkungen weiterverwenden kann. In diesem Fall kann das Fehlerbeschreibungsprotokoll praktisch gleichzeitig mit den Messdaten versendet werden, ohne dass die Messdatenübertragung unterbrochen werden muss.

In einer besonderen Weiterbildung des angegebenen Verfahrens weisen die Pulse mit der zweiten Höhe eine gleiche Breite auf, so dass diese in einfacher Weise empfängerseitig decodiert werden können.

Gemäß einem weiteren Aspekt der Erfindung ist eine Steuer-vorrichtung eingerichtet, eines der angegebenen Verfahren durchzuführen.

In einer Weiterbildung der angegebenen Steuervorrichtung weist die angegebene Vorrichtung einen Speicher und einen Prozessor auf. Dabei ist eines der angegebenen Verfahren in Form eines Computerprogramms in dem Speicher hinterlegt und der Prozessor zur Ausführung des Verfahrens vorgesehen, wenn das Computerprogramm aus dem Speicher in den Prozessor geladen ist.

Gemäß einem weiteren Aspekt der Erfindung umfasst ein Computerprogramm Programmcodemittel, um alle Schritte eines der angegebenen Verfahren durchzuführen, wenn das Computerprogramm auf einem Computer oder einer der angegebenen Vorrichtungen ausgeführt wird.

Gemäß einem weiteren Aspekt der Erfindung enthält ein Computerprogrammprodukt einen Programmcode, der auf einem computerlesbaren Datenträger gespeichert ist und der, wenn er auf einer Datenverarbeitungseinrichtung ausgeführt wird, eines der angegebenen Verfahren durchführt.

Gemäß einem weiteren Aspekt der Erfindung umfasst ein Sensor eine der angegebenen Steuervorrichtungen.

In einer besonderen Weiterbildung ist der angegebene Sensor ein Raddrehzahlsensor.

Gemäß einem weiteren Aspekt der Erfindung umfasst ein Fahrzeug einen der angegebenen Raddrehzahlsensoren.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Zeichnungen näher erläutert werden, wobei:
Fig. 1 eine schematische Ansicht eines Fahrzeuges mit einer Fahrdynamikregelung,
Fig. 2 eine schematische Ansicht eines Raddrehzahlsensors in dem Fahrzeug der Fig. 1,
Fig. 3 ein Diagramm mit einem Ausgangssignal aus dem Raddrehzahlsensor der Fig. 2, und
Fig. 4 ein weiteres Diagramm mit einem Ausgangssignal aus dem Raddrehzahlsensor der Fig. 2 zeigen.

In den Figuren werden gleiche technische Elemente mit gleichen Bezugszeichen versehen und nur einmal beschrieben.

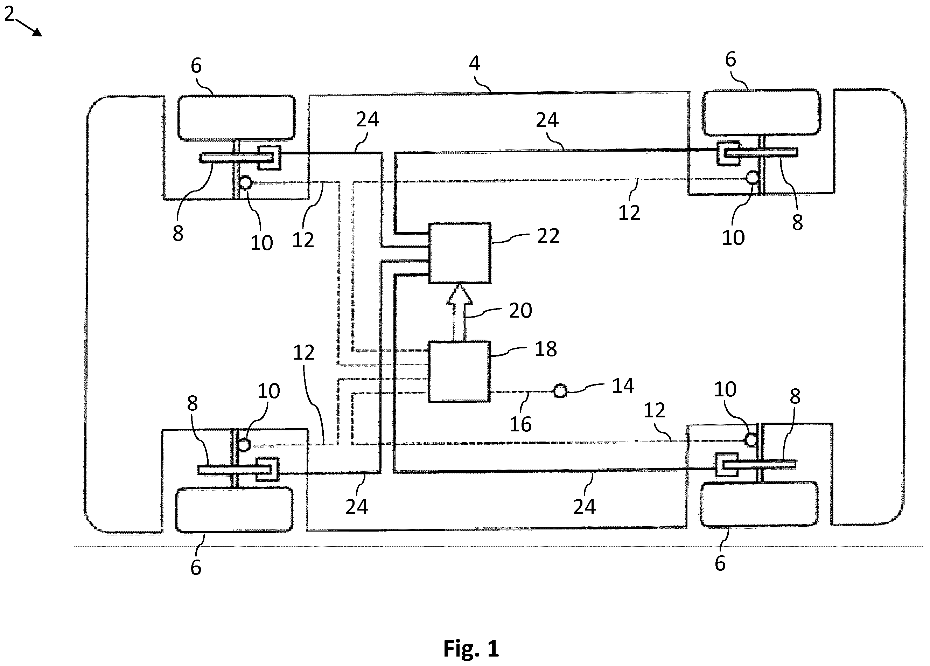

Es wird auf Fig. 1 Bezug genommen, die eine schematische Ansicht eines Fahrzeuges 2 mit einer an sich bekannten Fahrdynamikregelung zeigt. Details zu dieser Fahrdynamikregelung können beispielsweise der DE 10 2011 080 789 A1 entnommen werden.

Das Fahrzeug 2 umfasst ein Chassis 4 und vier Räder 6. Jedes Rad 6 kann über eine ortsfest am Chassis 4 befestigte Bremse 8 gegenüber dem Chassis 4 verlangsamt werden, um eine Bewegung des Fahrzeuges 2 auf einer nicht weiter dargestellten Straße zu verlangsamen.

Dabei kann es in einer dem Fachmann bekannten Weise passieren, dass die Räder 6 des Fahrzeuges 2 ihre Bodenhaftung verlieren und sich das Fahrzeug 2 sogar von einer, beispielsweise über ein nicht weiter gezeigtes Lenkrad vorgegebenen Trajektorie durch Untersteuern oder Übersteuern wegbewegt. Dies wird durch an sich bekannte Regelkreise wie ABS (Antiblockiersystem) und ESP (elektronisches Stabilitätsprogramm) vermieden.

In der vorliegenden Ausführung weist das Fahrzeug 2 dafür Drehzahlsensoren 10 an den Rädern 6 auf, die eine Drehzahl 12 der Räder 6 erfassen. Ferner weist das Fahrzeug 2 einen Inertialsensor 14 auf, der Fahrdynamikdaten 16 des Fahrzeuges 2 erfasst, die beispielsweise eine Nickrate, eine Wankrate, eine Gierrate, eine Querbeschleunigung, eine Längsbeschleunigung und/oder eine Vertikalbeschleunigung in einer dem Fachmann an sich bekannten Weise umfassen können.

Basierend auf den erfassten Drehzahlen 12 und Fahrdynamikdaten 16 kann eine Auswertevorrichtung in Form eines Reglers 18 in einer dem Fachmann bekannten Weise bestimmen, ob das Fahrzeug 2 auf der Fahrbahn rutscht oder sogar von der oben genannten vorgegebenen Trajektorie abweicht und entsprechend mit einem an sich bekannten Reglerausgangssignal 20 darauf reagieren. Das Reglerausgangssignal 20 kann dann von einer Stelleinrichtung 22 verwendet werden, um mittels Stellsignalen 24 Stellglieder, wie die Bremsen 8 anzusteuern, die auf das Rutschen und die Abweichung von der vorgegebenen Trajektorie in an sich bekannter Weise reagieren.

Anhand einer der in Fig. 1 gezeigten Drehzahlsensoren 10 soll die vorliegende Erfindung näher verdeutlicht werden, auch wenn die vorliegende Erfindung an beliebigen Sensoren, wie beispielsweise dem Inertialsensor 14 umsetzbar ist.

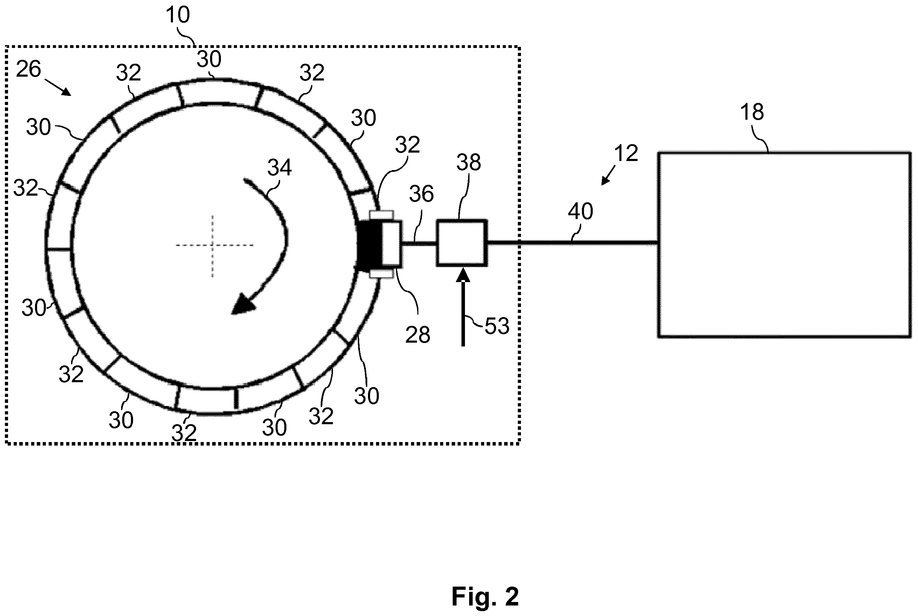

Es wird auf Fig. 2 Bezug genommen, die eine schematische Ansicht einer der Drehzahlsensoren 10 in der Fahrdynamikregelung der Fig. 1 zeigt.

Der Drehzahlsensor 10 ist in der vorliegenden Ausführung als aktiver Drehzahlsensor ausgeführt, der eine drehfest am Rad 6 befestigte Encodersscheibe 26 und einen ortsfest zum Chassis 4 befestigen Lesekopf 28 umfasst.

Die Encoderscheibe 26 besteht in der vorliegenden Ausführung aus aneinandergereihten Magnetnordpolen 30 und Magnetsüdpolen 32, die gemeinsam ein nicht weiter dargestelltes Gebermagnetfeld erregen. Dreht sich die am Rad 6 befestigte Encoderscheibe 26 mit diesem in eine Drehrichtung 34, dreht sich das Gebermagnetfeld entsprechend synchron mit.

Der Lesekopf 28 ist in der vorliegenden Ausführung ein magnetostriktives Element, das in Abhängigkeit der Winkellage des vom Encoderrad 26 erregten Gebermagnetfeldes seinen elektrischen Widerstand ändert.

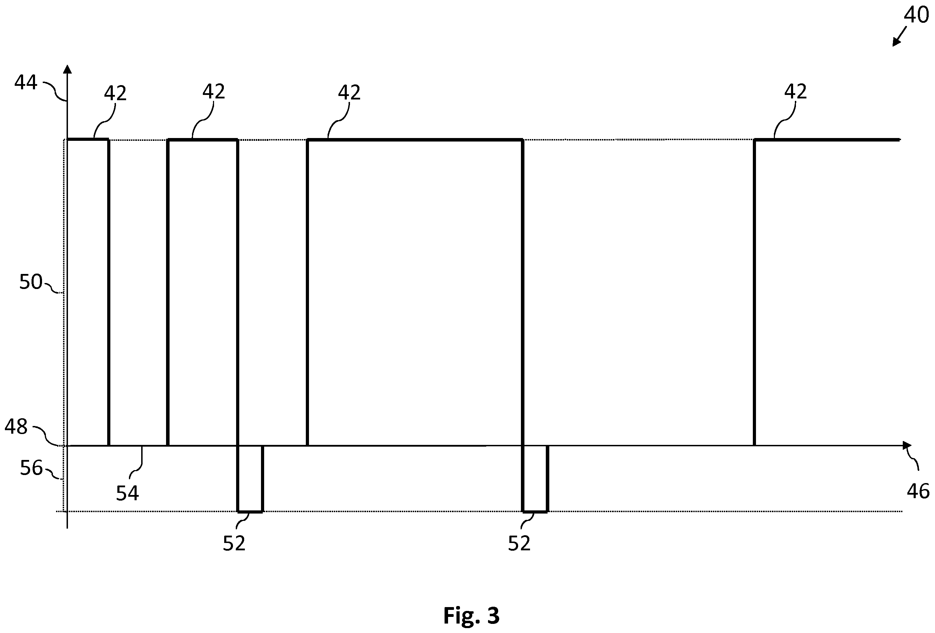

Zur Erfassung der Drehzahl 12 wird die Änderung der Winkellage des Encoderrades 26 und damit die Änderung des elektrischen Widerstandes des Lesekopfes 28 erfasst. Dazu kann der Lesekopf 28 in an sich bekannter Weise an eine nicht weiter dargestellte Widerstandsmessschaltung, wie beispielsweise eine an sich bekannte Brückenschaltung angeschlossen werden. In Abhängigkeit des elektrischen Widerstandes des Lesekopfes 28 wird in der Widerstandsmessschaltung ein periodisches Ausgangssignal, nachstehend Drehzahlgebersignal 36 genannt, erzeugt. Basierend auf dem Drehzahlgebersignal 36 kann in an sich bekannter Weise in einer dem Lesekopf 28 nachgelagerten Signalaufbereitungsschaltung 38 ein von der Drehzahl 12 abhängiges und in Fig. 3 gezeigtes Pulssignal 40 erzeugt und an den Regler 18 ausgegeben werden. Hierzu und zu weiteren Hintergrundinformationen zu aktiven Raddrehzahlsensoren wird auf den einschlägigen Stand der Technik, wie beispielsweise die DE 101 46 949 A1 verwiesen.

Das Pulssignal 40 trägt die Drehzahl 12 frequenzmoduliert in nachstehend Messpulsen 42 genannten ersten Pulsen, die in Fig. 3 in einem Signal 44 - Zeit 46 - Diagramm aufgetragen sind. Die Frequenzmodulation an sich ist bereits durch das Messverfahren in dem oben genannten Drehzahlsensor 10 gegeben, wobei die Messpulse 42 in der Signalaufbereitungsschaltung 38 generiert werden können.

Die Messpulse 42 besitzen ausgehend von einem bestimmten Referenzsignalwert 48 eine vorbestimmte erste Höhe 50. Im Rahmen der Frequenzmodulation bestimmt sich die Anzahl der Messpulse 42 über die Zeit 46 nach dem zu übertragenden Messwert für die Drehzahl 12, was heißt, dass die Anzahl der Messpulse 42 mit steigender Drehzahl 12 zunimmt. In Fig. 3 ist daher das Pulssignal 40 in einem Zustand gezeigt, in dem die Drehzahl 12 über die Zeit 44 sinkt und die Anzahl der Messpulse 42 über einen bestimmten Zeitraum abnehmen.

Die Übertragung von Messpulsen 42 in aktiven Drehzahlsensoren, wie dem zuvor beschriebenen Drehzahlsensor 10 ist eingehend bekannt und soll daher nicht weiter vertieft werden.

In der vorliegenden Ausführung werden in das Pulssignal 40 neben den die Drehzahl 12 beschreibenden Messpulsen 42 auch nachstehend Fehlerpulse 52 genannte zweite Pulse eingetragen, aus denen das Auftreten eines Fehlers 53 ab einem Fehlerzeitpunkt 54 hervorgeht. Der Fehler 53 kann der Signalaufbereitungsschaltung 38 beispielsweise über eine nicht weiter gezeigte Überwachungsschaltung bereitgestellt werden. Die Fehlerpulse 52 weisen im Rahmen der vorliegenden Ausführung eine zweite Höhe 56 auf, die gesehen von den Messpulsen 42 aus ausgehend vom Referenzsignalwert 48 in die negative Richtung laufen.

Für den Empfänger 18 ist damit allein durch das Auftreten der Fehlerpulse 52 unmittelbar ersichtlich, dass der Fehler 53 vorliegt, wobei auch der Fehlerzeitpunkt 54 selbst abgeschätzt werden kann.

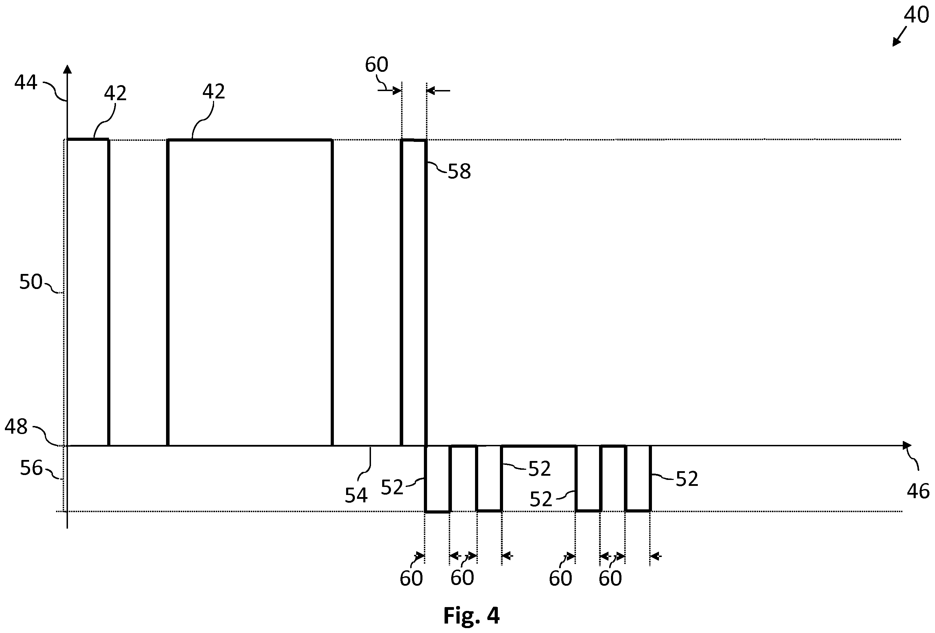

Um dem Empfänger 18 zudem die Bewertung des Fehlers zu ermöglichen, können darüber hinaus noch Fehlerinformationen übertragen werden, was nachstehend anhand von Fig. 4 beschrieben werden soll.

In Fig. 4 wird nach Auftritt des Fehlers 53 zum Fehlerzeitpunkt 54 ein Synchronisierungspuls 58 gesendet, der die gleiche Höhe 50 aufweist, wie die Messpulse 42. Eine zeitliche Breite 60 des Synchronisierungspulses 58 ist dabei genauso groß, wie die zeitliche Breite 60 der Fehlerpulse 52. Auf diese Weise kann sich der Empfänger 18 auf die Fehlerpulse 52 synchronisieren, so dass er diese entsprechend decodieren kann.

Die Information über den Fehler 53 zum Fehlerzeitpunkt 54 und weitere Informationen können mit den Fehlerpulsen 52 codiert übertragen werden. Jeder Fehlerpuls 52 trägt dabei ein Bit. Werden beispielsweise acht Bits #0 bis #8 übertragen, so werden entsprechend acht Fehlerpulse 52 benötigt. Jeder Fehlerpuls 52, der mit der zweiten Höhe 56 übertragen wird, trägt für sein entsprechendes Bit #0 bis #8 die Information 1. Jeder Fehlerpuls 52, der mit dem Referenzwert 48 übertragen wird, trägt für sein entsprechendes Bit #0 bis #8 die Information 0.

Wird im Drehzahlsensor 10 zum Fehlerzeitpunkt 54 der Fehler 53 erkannt, kann das Bit #0="1" gesetzt und damit der erste Fehlerpuls 52 mit der zweiten Höhe 56 übertragen werden. Die Bit-Folge aus den verbleibenden definierbaren Bits #1, #2, #5, #6 und #7, also der verbleibenden Fehlerpulse 52 können dann für eine eindeutige Aufschlüsselung einer allgemeinen Fehlerinformation in 2⁵=32 Fehlerursachen herangezogen werden.

Die technischen Gegenstände der Fig. 3 und der Fig. 4 können dabei in geeigneter Weise miteinander kombiniert werden.

## Patentansprüche

1. Verfahren zum Senden einer Fehlerinformation in einem Pulssignal (40), das eingerichtet ist, Messwerte (12) aus einem Sensor (10) frequenzmoduliert mit eine erste Höhe (50) aufweisenden Höhe Pulsen (42) an einen Empfänger (18) zu übertragen, umfassend:
- Erkennen eines Fehlers (53) im Sensor (10), und
- Einbringen eines eine zweite, von der ersten Höhe (50) verschiedene Höhe (56) aufweisenden Pulses (52) in das Pulssignal (40), um den erkannten Fehler (53) im Pulssignal (40) anzuzeigen, **dadurch gekennzeichnet, dass** der Puls (52) mit der zweiten Höhe (56) unmittelbar auf einen Puls (42) mit der ersten Höhe (50) folgt, so dass beide Pulse (42, 52) eine gemeinsame Flanke aufweisen.

2. Verfahren nach Anspruch 1, wobei der Puls (52) mit der zweiten Höhe (56), gesehen von den Pulsen (42) mit der ersten Höhe (50) aus, negativ ist.

3. Verfahren nach einem der vorstehenden Ansprüche, wobei dem Puls (52) mit der zweiten Höhe (56) ein die erste Höhe (50) aufweisender Puls (58) mit einer vorbestimmten Breite (60) vorangeht.

4. Verfahren nach Anspruch 3, wobei der zweite Puls (52) mit der zweiten Höhe (56) und der dem zweiten Puls (52) vorangehende Puls (58) mit der ersten Höhe (50) die gleiche vorbestimmte Breite (60) aufweisen.

5. Verfahren nach einem der vorstehenden Ansprüche, umfassend Einbringen wenigstens eines weiteren eine zweite, von der ersten Höhe (50) verschiedene Höhe (56) aufweisenden Pulses (52) in das Pulssignal (40), um den erkannten Fehler (53) zu beschreiben.

6. Verfahren nach einem der vorstehenden Ansprüche, umfassend Codieren des Fehlers (53) basierend auf den Pulsen (52) mit der zweiten Höhe (56).

7. Verfahren nach Anspruch 5 oder 6, wobei die Pulse (52) mit der zweiten Höhe (52) eine gleiche Breite (60) aufweisen.

8. Steuervorrichtung (38), die eingerichtet ist, ein Verfahren nach einem der vorstehenden Ansprüche durchzuführen.

9. Sensor (13), insbesondere Raddrehzahlsensor, der eine Steuervorrichtung (38) nach Anspruch 8 umfasst.

## Claims

1. Method for transmitting error information in a pulse signal (40) which is configured to transmit measured values (12), which are frequency modulated with pulses (42) having a first magnitude (50), from a sensor (10) to a receiver (18) comprising:
- detecting an error (53) in the sensor (10), and
- introducing a pulse (52), having a second magnitude (56) which is different from the first magnitude (50), into the pulse signal (40) in order to indicate the detected error (53) in the pulse signal (40), **characterized in that** the pulse (52) with the second magnitude (56) directly follows a pulse (42) with the first magnitude (50), with the result that both pulses (42, 52) have a common edge.

2. Method according to Claim 1, wherein the pulse (52) with the second magnitude (56) is negative in comparison with the pulses (42) with the first magnitude (50).

3. Method according to one of the preceding claims, wherein the pulse (52) with the second magnitude (56) is preceded by a pulse (58) which has the first magnitude (50) and a predetermined width (60).

4. Method according to Claim 3, wherein the second pulse (52) with the second magnitude (56) and the pulse (58) which precedes the second pulse (52) and has the first magnitude (50) have the same predetermined width (60) .

5. Method according to one of the preceding claims, comprising introducing at least one further pulse (52) having a second magnitude (56) which is different from the first magnitude (50) into the pulse signal (40) in order to describe the detected error (53).

6. Method according to one of the preceding claims, comprising
encoding the error (53) on the basis of the pulses (52) with the second magnitude (56).

7. Method according to Claim 5 or 6, wherein the pulses (52) with the second magnitude (52) have the same width (60) .

8. Control device (38) which is configured to carry out a method according to one of the preceding claims.

9. Sensor (13), in particular wheel speed sensor, which comprises a control device (38) according to Claim 8.

## Revendications

1. Procédé pour envoyer une information de défaut dans un signal impulsionnel (40), lequel est conçu pour transmettre à un récepteur (18) des valeurs mesurées (12) issues d'un capteur (10) modulées en fréquence avec des impulsions hautes (42) présentant une première amplitude (50), comprenant :
- la reconnaissance d'un défaut (53) dans le capteur (10) et
- l' incorporation dans le signal impulsionnel (40) d'une impulsion (52) présentant une deuxième amplitude (56), différente de la première amplitude (50), afin de signaler le défaut (53) reconnu dans le signal impulsionnel (40),
**caractérisé en ce que**
l'impulsion (52) ayant la deuxième amplitude (56) suit immédiatement une impulsion (42) ayant la première amplitude (50), de sorte que les deux impulsions (42, 52) possèdent un front commun.

2. Procédé selon la revendication 1, l'impulsion (52) ayant la deuxième amplitude (56), vue depuis les impulsions (42) ayant la première amplitude (50), étant négative.

3. Procédé selon l'une des revendications précédentes, une impulsion (58) ayant la première amplitude (50) précédant l'impulsion (52) ayant la deuxième amplitude (56) d'une largeur (60) prédéterminée.

4. Procédé selon la revendication 3, la deuxième impulsion (52) ayant la deuxième amplitude (56) et l'impulsion (58) ayant la première amplitude (50) qui précède la deuxième impulsion (52) possédant la même largeur (60) prédéterminée.

5. Procédé selon l'une des revendications précédentes, comprenant l'incorporation dans le signal impulsionnel (40) d'au moins une impulsion (52) supplémentaire, présentant une deuxième amplitude (56), différente de la première amplitude (50), en vue de décrire le défaut (53) reconnu.

6. Procédé selon l'une des revendications précédentes, comprenant le codage du défaut (53) en se basant sur les impulsions (52) ayant la deuxième amplitude (56) .

7. Procédé selon la revendication 5 ou 6, les impulsions (52) ayant la deuxième amplitude (52) possédant une même largeur (60).

8. Dispositif de commande (38) qui est conçu pour mettre en oeuvre un procédé selon l'une des revendications précédentes.

9. Capteur (13), notamment capteur de vitesse de rotation de roue, qui comporte un dispositif de commande (38) selon la revendication 8.
